# NEUE EUROPÄISCHE PATENTSCHRIFT

(11) **EP 1 454 521 B2**
(45) Veröffentlichungstag und Bekanntmachung des Hinweises auf die Entscheidung über den Einspruch: **12.06.2019**
(45) Hinweis auf die Patenterteilung: 27.04.2016
(21) Anmeldenummer: 04100826.9
(22) Anmeldetag: 02.03.2004
(51) Int. Cl.: A01F 15/07

(54) **Vorrichtung zum Umhüllen eines Ballens mit einer Hüllbahn und Ballenpresse**
Wrapping device for bales and baling press
Dispositif pour envelopper des balles et presse à balles

(30) Priorität: 06.03.2003 DE 10309657
(43) Veröffentlichungstag der Anmeldung: 08.09.2004
(73) Patentinhaber: Deere & Company, Moline, IL 61265 (US)
(72) Erfinder: Viaud, Jean, 70100 Gray (FR)
(74) Vertreter: Holst, Sönke

(56) Entgegenhaltungen:
- EP-A- 0 296 709
- DE-A- 3 418 681
- DE-A- 4 442 479
- US-A- 4 409 784
- US-A- 5 129 207
- US-A- 5 231 828
- US-A- 5 557 510
- US-A- 5 729 953

## Beschreibung

Die Erfindung betrifft eine Ballenpresse mit einer Vorrichtung zum Umhüllen eines Ballens mit einer Hüllbahn, mit einem Vortriebselement, vorzugsweise einer Vortriebswalze, welches die Hüllbahn von einem Vorrat, vorzugsweise in der Art einer Rolle, abzieht, und einer Kupplungseinrichtung, über die das Vortriebselement zu Beginn des Wickelvorgangs kurzzeitig angetrieben wird und die während des übrigen Wickelvorgangs eine Mitnahme der Hüllbahn durch den Ballen erlaubt.

Die DE-A1-100 11 158 zeigt eine Ballenpresse mit einer Vorrichtung zum Umhüllen eines Ballens mit einer Hüllbahn. Die Hüllbahn wird mittels einer Vortriebswalze von einer Vorratsrolle abgezogen. Die Vorrichtung weist einen Sensor auf, welcher ermittelt, ob sich die Hüllbahn um die Vortriebswalze wickelt und somit dem Ballen nicht ordnungsgemäß zugeführt wird. Wird durch den Sensor eine Fehlfunktion ermittelt, so wird der Umhüllungsvorgang abgebrochen.

Die US-A-5,279,953 zeigt eine Ballenpresse mit einer Zufuhreinrichtung zur Zuführung von Umhüllungsmaterial von einer Sspindel in eine Kammer, wobei die Vorrichtung ein Paar Zufuhrrollen aufweist, die das Umhüllungsmaterial zwischen sich aufnehmen. Die Zufuhreinrichtung weist eine Kupplung auf, die die Zufuhrrollen derart von einem Antrieb trennen kann, dass das Umhüllungsmaterial von Riemen von der Spindel abgezogen werden kann.

Die DE-A1-44 42 479 zeigt eine Ballenpresse mit einer einer Antriebsrolle zugeordneten Freilaufkupplung, die es während der Zuführung von Wickelmaterial auf einen gepressten Ballen möglich macht, dass die Antriebsrolle zusammen mit einer Quetschrolle frei drehbar ist.

Derartige Vorrichtungen zum Umhüllen eines Ballens brechen den Umhüllungsvorgang erst dann ab, wenn sich die Hüllbahn bereits um die Vortriebswalze gewickelt hat. Um die Vorrichtung bzw. eine mit einer solchen Vorrichtung versehene Ballenpresse wieder betriebsbereit zu machen, muss die Hüllbahn von der Vortriebswalze entfernt werden, was zeit- und arbeitsaufwändig ist.

Aus der US-A-5,231,828 ist bekannt, durch eine ansteuerbare Kupplung eine kurzzeitige Verbindung zwischen eines Antriebswelle und der Antriebswelle der Vortriebswalze herzustellen. Das der Erfindung zugrunde liegende Problem wird darin gesehen, dass eine derartige Vorrichtung zum Umhüllen eines Ballens weiter verbessert wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird eine Ballenpresse mit einer verbesserten Vorrichtung zum Umhüllen eines Ballens zur Verfügung gestellt, welche verhindert, dass sich die Hüllbahn um die Vortriebswalze bzw. allgemein um

Vortriebselement wickelt oder sich aufstaut, wenn sie sich nicht ordnungsgemäß um den Ballen wickelt. Durch das Vorsehen einer Kupplungseinrichtung ist es möglich, dass das Vortriebselement nur zu Beginn des Wickelvorgangs kurzzeitig angetrieben wird, um den Wickelvorgang zu starten. Nachdem ausreichend Hüllbahn bzw. Material von der Rolle bzw. dem Vorrat abgestreift wurde, um in den Bereich des Ballens zu gelangen und durch diesen ergriffen zu werden, wird der Antrieb des Vortriebselements gestoppt. Auf diese Weise wird durch das Vortriebselement kein weiteres Material von dem Vorrat abgezogen. Wurde die Hüllbahn dem Ballen korrekt zugeführt, so wird sie durch diesen ergriffen. Da die Kupplungseinrichtung es erlaubt, dass die Hüllbahn durch den Ballen mitgenommen wird und dieser Vorgang somit nicht durch das Vortriebselement blockiert wird, kann sich der Ballen selbsttätig mit Hüllbahn umwickeln. Wird die Hüllbahn hingegen nicht durch den Ballen ergriffen, so wird sie auch nicht durch das Vortriebselement von dem Vorrat abgezogen.

Verbindet die Kupplungseinrichtung das Vortriebselement selektiv mit seiner Antriebswelle so kann vorgesehen sein, dass diese Antriebswelle, dauerhaft mit einem Antrieb, welcher beispielsweise auch den Ballen in Rotation versetzt, in Verbindung steht. Die Antriebswelle kann beispielsweise über einen Riemenantrieb mit einer angetriebenen Walze verbunden sein, welche auf den Ballen einwirkt.

Die Kupplungseinrichtung weist eine Freilaufkupplung auf, so dass sie, insbesondere wenn das Vortriebselement nicht angetrieben wird, eine ungehinderte Bewegung desselben in einer Richtung zulässt und in einer zweiten bzw. entgegengesetzten Richtung eine Drehmomentübertragung ermöglicht.

Die Freilaufkupplung ist zwischen der Antriebswelle und dem Vortriebselement derart angeordnet, dass sich die Antriebswelle in dem Vortriebselement, wenn dieses nicht angetrieben wird bzw. werden soll, in ihrer normalen Drehrichtung frei bewegen kann.

In der entgegengesetzten Richtung ist eine Drehmomentübertragung möglich. Dies kann beispielsweise dazu eingesetzt werden, um das durch die von dem Ballen erfasste Hüllbahn angetriebene Vortriebselement abzubremsen, indem seine Drehzahl durch die Freilaufkupplung auf die Drehzahl der Antriebswelle begrenzt wird.

Eine derartige Freilaufkupplung ist insbesondere dann günstig, wenn die Antriebswelle dauerhaft angetrieben wird. Dauerhaft ist hierbei so zu verstehen, dass die Antriebswelle zumindest während des Wickelvorgangs angetrieben wird. Bei einer üblichen Anordnung bei der die Antriebswelle mit einer den Ballen in Rotation versetzenden Walze über einen Riementrieb verbunden ist, kann aber auch vorgesehen sein, dass die Antriebswelle während des gesamten Ballenbildungsvorgangs angetrieben wird.

Wird das Vortriebselement mit einer Geschwindigkeit angetrieben, die geringer ist als die Umfangsgeschwindigkeit des Ballens, so kann dadurch ein Dehnen oder Spannen der einenends durch den Ballen ergriffenen Hüllbahn erzielt werden, wodurch diese sich dicht an den Ballen anlegen kann.

Der Antrieb des Vortriebselements erfolgt durch Mittel, welche die Antriebswelle drehfest mit dem Vortriebselement verbinden. Diese Mittel sind in der Art einer Kupplung ausgebildet, welche in aktiviertem bzw. eingerücktem Zustand einen Antrieb des Vortriebselements durch die Antriebswelle ermöglicht und bewirkt, dass das Vortriebselements in ausgerücktem Zustand der Kupplung nicht angetrieben wird.

Die Kupplungseinrichtung wirkt mit einer Steuer- oder Regeleinrichtung zusammen, die insbesondere die Stellung der Kupplung in Abhängigkeit von dem Fortgang des Ballenbildungs- bzw. Wickelvorgangs bestimmen kann. Eine derartige Steuer- oder Regeleinrichtung ist häufig zur Überwachung und Steuerung bzw. Reglung des Ballenbildungs- bzw. Wickelprozesses vorgesehen, so dass die zusätzliche Funktion in eine bereits vorhandene Einrichtung implementiert werden kann.

Eine Vorrichtung zum Umhüllen eines Ballens kann in der Industrie an Ballenpressen Verwendung finden, welche Ballen aus Papier, Abfällen, textilen Materialien etc. bilden. Besonders geeignet ist eine solche Vorrichtung aber zur Verwendung an einer landwirtschaftlichen Ballenpressen für Ballen aus landwirtschaftlichen Erntegütern, da diese üblicherweise an ein Zugfahrzeug angehängt sind und durch eine Bedienungsperson dieses Zugfahrzeugs überwacht werden müssen. Fehlfunktionen einer Umhüllungseinrichtung sind für diese Bedienungspersonen schwer festzustellen und werden häufig erst bei Auswurf des Ballens bemerkt.

In der Zeichnung ist ein nachfolgend näher beschriebenes Ausführungsbeispiel der Erfindung dargestellt. Es zeigt:
- Fig. 1: eine Ballenpresse mit einer Vorrichtung zum Umwickelns eines Ballens mit einer Hüllbahn,
- Fig. 2: die Vorrichtung aus Fig. 1 in einer genaueren Darstellung, mit einer Kupplungseinrichtung zum selektiven Antrieb eines Vortriebselements und
- Fig. 3: die Kupplungseinrichtung aus Fig. 2.

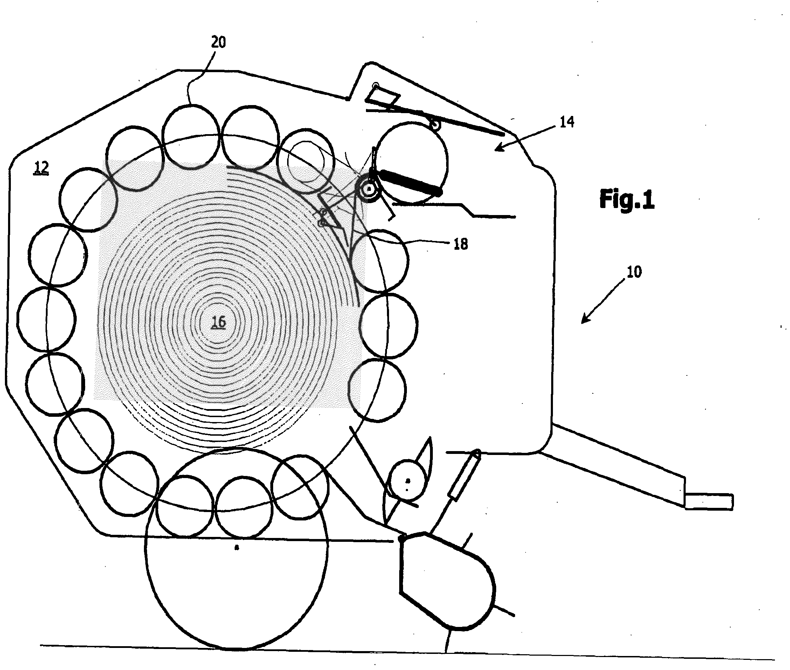

Figur 1 zeigt eine Ballenpresse 10 von im Wesentlichen herkömmlicher Bauart mit einem Pressraum 12. Entsprechend dem vorliegenden Ausführungsbeispiel ist darüber hinaus eine Vorrichtung 14 zum Umwickeln eines in dem Pressraum 12 gebildeten Ballens 16 mit einer Hüllbahn 18 vorgesehen.

Bei der Ballenpresse 10 kann es sich um eine bekannte Bauart handeln, d.h. mit einem Pressraum 12 konstanter oder variabler Größe, welcher ausschließlich oder in Kombination von Riemen, Ketten, oder wie in dem Ausführungsbeispiel von Walzen 20 umgeben wird.

Eine derartige Ballenpresse 10 kann in der Landwirtschaft zum Bilden von Ballen 16 aus Erntegut, wie z.B. Stroh, Heu oder Gras eingesetzt werden. Es ist aber auch eine Verwendung in industriellen Bereichen denkbar.

Die Vorrichtung 14 ist in der vorliegenden Ausführungsform an der Vorderseite der Ballenpresse 10 vorgesehen. Die Hüllbahn 18 wird durch einen Spalt zwischen zwei benachbarten Walzen 20 hindurch dem Pressraum 12 zugeführt, wo sie von dem in Drehung versetzten Ballen 16 mitgenommen wird. Die Vorrichtung 14 kann in einem mittleren Bereich der Ballenpresse 10 oder auch vor oder oberhalb des Pressraums 12 angeordnet sein.

Mittels der Hüllbahn 18 wird der Ballen 16 gebunden und somit daran gehindert, nach einem Verlassen der Ballenpresse 10 auseinander zu fallen. Bei der Hüllbahn 18 kann es sich um Folie, Netz, Gewebe, Papier oder dergleichen handeln.

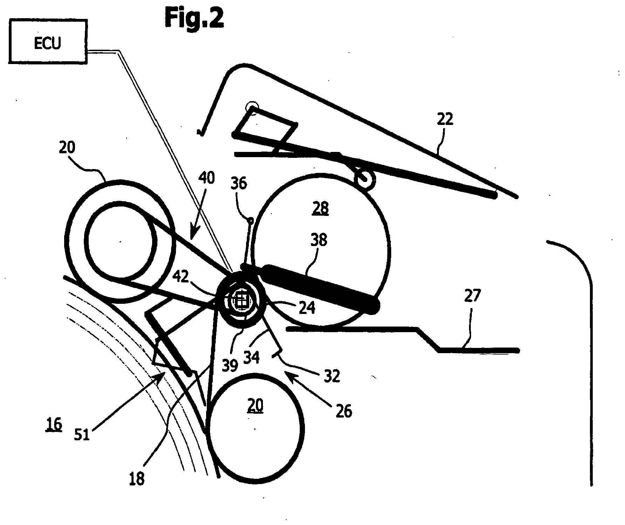

Es wird nun auch auf Figur 2 Bezug genommen in der die Ballenpresse 10 nur ausschnittsweise und die Vorrichtung 14 vergrößert dargestellt ist.

Die Vorrichtung 14 weist ein Gehäuse 22, eine zukünftig als Vortriebselement 24 bezeichnete Vortriebswalze und eine Trenneinrichtung 26 auf. Das Gehäuse 22 enthält einen Fachboden 27, auf welchem die Hüllbahn 18 als Rolle 28 gelagert wird. Der Fachboden 27 kann auch derart ausgebildet sein, dass er mehrere Rollen 28 bevorratet und/oder Stufen oder Mulden zu deren Lagesicherung aufweist.

Das Vortriebselement 24 ist auf seiner Umfangsfläche mit einem Belag hohen Reibwerts versehen und kann in Drehung versetzt werden. Die Drehung hilft anfänglich, die Hüllbahn 18 von der Rolle 28 abzuziehen. Die Rolle 28 befindet sich oberhalb der Auflageebene des Fachbodens 27 und kommt in ihrer Betriebsstellung mit einem Bereich, der etwa einer 6 bis 9 Uhr Stellung entspricht, an der Vortriebswalze 24 zur Anlage. Durch das Vortriebselement 24 wird die Hüllbahn 18 von der Rolle 28 abgezogen und durch den Spalt zwischen den benachbarten Walzen 20 in den Pressraum 12 geführt. Bei einem ordnungsgemäßen Betrieb wird die Hüllbahn 18 von dem rotierenden Ballen 16 erfasst und hüllt diesen ein.

Die Trenneinrichtung 26 weist ein Messer 32 auf, welches auf einem Arm 34 um ein Lager 36 schwenkbar befestigt ist, um in den Weg der Hüllbahn 18 einzutreten und diese zu durchtrennen bzw. ein Abreißen zu bewirken, wenn der Einhüllvorgang abgeschlossen ist. Ein Verschwenken des Messers 32 erfolgt über einen Hydraulikmotor 38, welcher mittels einer bekannten Steuer- bzw. Regeleinrichtung (ECU) betätigt wird.

Darüber hinaus ist mit dem Arm 34 ein weiterer Arm 48 schwenkbar verbunden, dessen Stellung ebenfalls von dem Hydraulikmotor 38 bestimmt wird. Im vorliegenden Ausführungsbeispiel ist an dem Arm 38 eine Leiteinrichtung 51 schwenkbar vorgesehen. Eine derartige Leiteinrichtung 51 kann der deutschen Patentanmeldung mit dem Aktenzeichen 102 26 797.9 vom 15.06.2002 entnommen werden.

Befindet sich der Hydraulikmotor 38 in seiner eingefahrenen Stellung so befindet sich das Messer 32 in einer derart verschwenkten Stellung, dass es den Lauf der Hüllbahn 18 nicht beeinflusst.

Das Vortriebselement 24 ist durch eine Antriebswelle 39 selektiv antreibbar, die über einen Riementrieb 40 mit einer der Walzen 20 in Verbindung steht, wobei diese Walze 20 von einem nicht dargestellten Antrieb in Rotation versetzt werden kann.

Die selektive Verbindung der Antriebswelle 39 mit dem Vortriebselement 24 erfolgt über eine Kupplungseinrichtung 42, welche zwischen der Antriebswelle 39 und dem Vortriebselement 24 vorgesehen ist.

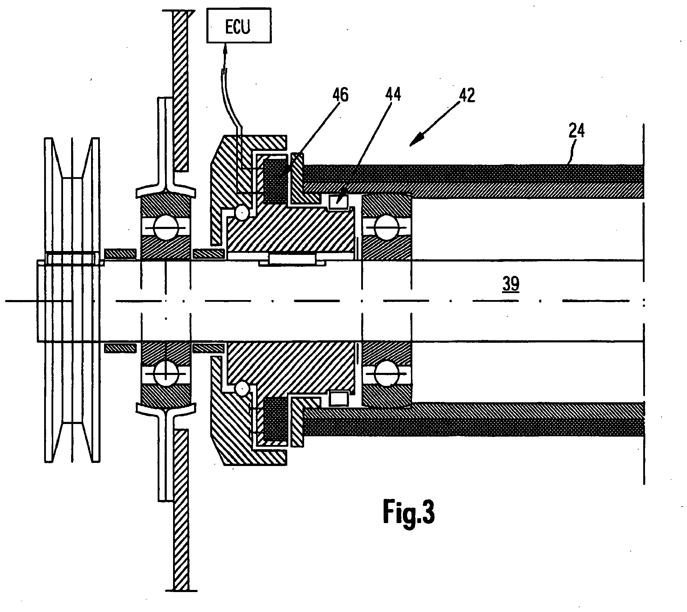

Es wird nun auch auf Fig. 3 Bezug genommen, aus der hervorgeht, dass die Kupplungseinrichtung 42 eine Freilaufkupplung 44 aufweist, welche in bekannter Art und Weise die Antriebswelle 39 mit dem Vortriebselement 24 derart verbindet, dass die Antriebswelle 39 sich in ihrer üblichen Antriebsrichtung in dem Vortriebselement 24 frei bewegen kann, bei einer umgekehrten Relativbewegung ein Drehmomentübertragen zwischen der Antriebswelle 39 und dem Vortriebselement 24, welche der normalen Bewegungsrichtung der Antriebswelle 39 entgegengerichtet ist, gegeben ist.

Darüber hinaus weist die Kupplungseinrichtung 42 eine ansteuerbare Kupplung 46 auf, welche das Vortriebselement 24 mit der Antriebswelle 39 in Abhängigkeit von einem Steuersignal drehfest verbinden kann.

Im Folgenden soll auf die Funktionsweise der Vorrichtung 14 genauer eingegangen werden. Hierzu wird sowohl auf Fig. 1 als auch auf die Fig. 2 und 3 Bezug genommen.

Ist die Bildung des Ballens 16 in dem Pressraum 12 abgeschlossen, was in bekannter Art und Weise durch einen nicht dargestellten Sensor, welcher beispielsweise mechanisch oder optisch die Dicke des Ballens 16 bestimmt, ermittelt wird, wird die Vorrichtung 14 aktiviert. Dies geschieht, indem der Hydraulikmotor 38 von der Steuer- bzw. Regeleinrichtung (ECU) angesteuert, in seine in Fig. 2 dargestellte, eingefahrene Stellung gebracht wird.

Darüber hinaus liefert die Steuer- bzw. Regeleinrichtung (ECU) ein Steuersignal an die Kupplungseinrichtung 42. Aufgrund dieses Steuersignals stellt die Kupplung 46 eine drehfeste Verbindung zwischen der Antriebswelle 39 und dem Vortriebselement 24 her.

Das nun rotierend angetriebene Vortriebselement 24 zieht die Hüllbahn 18 von der Rolle 28 ab und fördert diese in Richtung des Ballens 18. Die Leiteinrichtung 51 wirkt hierbei unterstützend, indem sie die Hüllbahn 18 an den Ballen 16 heranführt.

Nach einer kurzen Zeitdauer, welche derart ausgelegt ist, dass durch das Vortriebselement 24 eine derartige Menge an Hüllbahn 18 von der Rolle 28 abgezogen wurde, die ausreicht, um an den Ballen 16 heranzugelangen und durch diesen erfasst zu werden, wird die Kupplung 46 durch die Steuer- bzw. Regeleinrichtung (ECU) derart angesteuert, dass die Kupplung 46 die drehfeste Verbindung zwischen der Antriebswelle 39 und dem Vortriebselement 24 trennt.

Ein weiteres Abziehen von Hüllbahn 18 von der Rolle 28 erfolgt nun dadurch, dass die Hüllbahn 18 von dem rotierenden Ballen 16 ergriffen wurde und dieser die Hüllbahn 18 aufgrund seiner Rotation mitführt und um sich wickelt.

Bei der gezeigten Anordnung würde das frei auf der Antriebswelle 39 angeordnete Vortriebselement 24 durch die durch den Ballen 16 abgezogene Hüllbahn 18 mit einer Drehzahl rotieren, die die Drehzahl der Antriebswelle 39 übersteigt. Aufgrund der Freilaufkupplung 44 ist die Drehzahl des Vortriebselements 24 aber auf die Drehzahl der Antriebswelle 39 begrenzt. Die Antriebswelle 39 wiederum ist über den Riementrieb 40 derart mit der angetriebenen Rolle 20 verbunden, dass die Umfangsgeschwindigkeit des Vortriebselements 24 durch die Freilaufkupplung 44 auf eine Umfangsgeschwindigkeit begrenzt wird, welche geringer ist als die Umfangsgeschwindigkeit des Ballens 16. Die Hüllbahn 18 wird durch das Vortriebselement 24 gebremst und somit gedehnt bzw. gespannt. Dies ist wünschenswert, um zu bewirken, dass die Hüllbahn 18 sich dicht an den Ballen 16 anlegt und diesen fest umschließt.

Folgt die Hüllbahn 18 nicht dem vorgegebenen Pfad und wird sie somit auch nicht durch den Ballen 16 ergriffen, so erfolgt kein Transport der Hüllbahn 18 durch den Ballen 16. Da das Vortriebselement 24 durch die Antriebswelle 39 über die Kupplung 46 nur zu Beginn des Wickelvorgangs kurzzeitig angetrieben wird, wird die Hüllbahn 18 durch das Vortriebselement 24 nicht weiter von der Rolle 28 abgezogen und es kann nicht zu einem Umwickeln des Vortriebselements 24 durch die Hüllbahn 18 kommen.

## Patentansprüche

1. Ballenpresse (10) mit einer Vorrichtung (14) zum Umhüllen eines Ballens (16) mit einer Hüllbahn (18), mit einem Vortriebselement (24), vorzugsweise einer Vortriebswalze; welches die Hüllbahn (18) von einem Vorrat, vorzugsweise in der Art einer Rolle (28), abzieht, und mit einer Kupplungseinrichtung (42), wobei die Kupplungseinrichtung eine ansteuerbare Kupplung (46) aufweist, über die das Vortriebselement (24) zu Beginn des Wickelvorgangs kurzzeitig angetrieben wird und die während des übrigen Wickelvorgangs eine Mitnahme der Hüllbahn (18) durch den Ballen (16) erlaubt, wobei die kurze Zeltdauer derart ausgelegt ist, dass durch das Vortriebselement (24) eine derartige Menge an Hüllbahn (18) von der Rolle (28) abziehbar ist, die ausreicht, um an den Ballen (16) heranzugelangen und durch diesen erfasst zu werden, **dadurch gekennzeichnet, dass** die Kupplungseinrichtung (42) zwischen der Antriebswelle (39) des Vortriebselements und dem Vortriebselement (24) vorgesehen ist und über die Kupplungseinrichtung (42) eine selektive Verbindung der Antriebswelle (39) mit dem Vortriebselement (24) erfolgt, wobei eine Steuer- bzw. Regeleinrichtung (ECU) ein Steuersignal an die Kupplungseinrichtung (42) liefert, aufgrund dessen durch die Kupplung (46) eine drehfeste Verbindung zwischen der Antriebswelle (39) und dem Vortriebselement (24) herstellbar ist,
wobei die Kupplung (46) durch die Steuer- bzw. Regeleinrichtung (ECU) derart ansteuerbar ist, dass durch die Kupplung (46) eine drehfeste Verbindung zwischen der Antriebswelle (39) und dem Vortriebselement (24) trennbar ist,
und wobei die Kupplungseinrichtung (42) eine Freilaufkupplung (44) aufweist, welche eine freie Bewegung der Antriebswelle (39) in Ihrer üblichen Bewegungsrichtung mit Bezug auf das Vortriebselement (24) zulässt und eine Drehmomentübertragung zwischen der Antriebswelle (39) und dem Vortriebselement (24) entgegen dar üblichen Bewegungsrichtung der Antriebswelle (39) zulässt.

2. Ballenpresse (10) nach Anspruch 1, **dadurch gekennzeichnet, dass** die Antriebswelle (39) dauerhaft angetrieben wird.

3. Ballenpresse (10) nach Anspruch 1 oder 2, **dadurch gekennzeichnet, dass** das Vortriebselement (24) mit einer Umfangsgeschwindigkeit angetrieben wird, welche geringer ist als die Umfangsgeschwindigkeit des Ballens (16).

## Claims

1. Baler (10) with a device (14) for wrapping a bale (16) with a wrapping web (18), with an advancing element (24), preferably an advancing roller, which pulls off the wrapping web (18) from a store, preferably in the manner of a reel (28), and with a clutch mechanism (42), wherein the clutch mechanism has an activatable clutch (46), via which the advancing element (24) is briefly driven at the beginning of the winding operation and which permits the wrapping web (18) to be carried along by the bale (16) during the remaining wrapping operation, wherein the brief period of time is configured in such a manner that, by means of the advancing element (24), an amount of wrapping web (18) can be pulled off from the reel (28) to an extent sufficing in order to reach the bale (16) and to be grasped by the latter, **characterized in that** the clutch mechanism (42) is provided between the drive shaft (39) of the advancing element and the advancing element (24), and a selective connection of the driveshaft (39) to the advancing element (24) takes place via the clutch mechanism (42), wherein a control or regulating mechanism (ECU) supplies a control signal to the clutch mechanism (42), on the basis of which signal a non-rotatable connection between the driveshaft (39) and the advancing element (24) can be produced by the clutch (46), and wherein the clutch (46) can be activated by the control or regulating mechanism (ECU) in such a manner that a non-rotatable connection between the driveshaft (39) and the advancing element (24) can be separated by the clutch (46), and that the clutch mechanism (42) has a freewheeling clutch (44) that permits a free movement of the driveshaft (39) in the customary direction of movement thereof with respect to the advancing element (24) and permits a torque transmission between the driveshaft (39) and the advancing element (24) counter to the customary direction of movement of the driveshaft (39).

2. Baler (10) according to Claim 1, **characterized in that** the driveshaft (39) is permanently driven.

3. Baler (10) according to claim 1 or 2, **characterized in that** the advancing element (24) is driven at a peripheral speed which is lower than the peripheral speed of the bale (16).

## Revendications

1. Presse à balles (10) comprenant un dispositif (14) pour envelopper une balle (16) avec une bande d'enveloppement (18), comprenant un élément d'avance (24), de préférence un cylindre d'avance, qui tire la bande d'enveloppement (18) d'une réserve, de préférence à la manière d'un rouleau (28), et avec un dispositif d'accouplement (42), le dispositif d'accouplement présentant un accouplement commandable (46) par le biais duquel l'élément d'avance (24) est brièvement entraîné au début de l'opération d'enroulement et qui, pendant le reste de l'opération d'enroulement, permet un entraînement de la bande d'enveloppement (18) par la balle (16), la courte durée étant conçue de telle sorte qu'une quantité de bande d'enveloppement (18) puisse être tirée du rouleau (28) par l'élément d'avance (24), laquelle suffit pour être amenée contre la balle (16) et pour être saisie par celle-ci, **caractérisée en ce que** le dispositif d'accouplement (42) est prévu entre l'arbre d'entraînement (39) de l'élément d'avance et l'élément d'avance (24) et une connexion sélective de l'arbre d'entraînement (39) à l'élément d'avance (24) est réalisée par le biais du dispositif d'accouplement (42), un dispositif de commande ou de régulation (ECU) fournissant un signal de commande au dispositif d'accouplement (42), sur la base duquel une connexion solidaire en rotation entre l'arbre d'entraînement (39) et l'élément d'avance (24) peut être établie par l'accouplement (46), et un accouplement (46) pouvant être commandé par le dispositif de commande ou de régulation (ECU) de telle sorte qu'une connexion solidaire en rotation entre l'arbre d'entraînement (39) et l'élément d'avance (24) puisse être déconnectée par l'accouplement (46) et **en ce que** le dispositif d'accouplement (42) présente un accouplement à roue libre (44) que permet un déplacement libre de l'arbre d'entraînement (39) dans sa direction de déplacement usuelle par rapport à l'élément d'avance (24) et que permet un transfert de couple entre l'arbre d'entraînement (39) et l'élément d'avance (24) à l'encontre de la direction de déplacement usuelle de l'arbre d'entraînement (39).

2. Presse à balles (10) selon revendication 1, **caractérisée en ce que** l'arbre d'entraînement (39) est entraîné de manière durable.

3. Presse à balles (10) selon revendication 1 où 2, **caractérisée en ce que** l'élément d'avance (24) est entraîné avec une vitesse périphérique inférieure à la vitesse périphérique de la balle (16).
